# EUROPEAN PATENT SPECIFICATION

(11) **EP 2 826 362 B1**
(45) Date of publication and mention of the grant of the patent: **26.10.2016**
(21) Application number: 13177291.5
(22) Date of filing: 19.07.2013
(51) Int. Cl.: A01G 17/08

(54) **Hand-held binding apparatus for use in agriculture**
Tragbare Bindevorrichtung zur Verwendung in der Landwirtschaft
Appareil de ligature à main destiné à être utilisé en agriculture

(43) Date of publication of application: 21.01.2015
(73) Proprietor: FELCO Motion SA, 2206 Les Geneveys-sur-Coffrane (CH)
(72) Inventor: Bieler, Thierry, 1112 Echichens (CH); Cardoletti, Laurent, 1844 Villeneuve (CH); Tinguely, Simon, 1007 Lausanne (CH); Koechli, Christian, 1462 Yvonnand (CH); Fleury, Christian, 1585 Bellerive (CH); Rothenbühler, Yves, 2037 Montmollin (CH); Charpilloz, Jordan, 2112 Motiers (CH); Koeller, Jeroen, 2035 Corcelles (CH); Müller, Nicolas, 2610 Saint-Imier (CH); Golay, Fabien, 2610 Saint-Imier (CH)
(74) Representative: P&TS SA (AG, Ltd.)

(56) References cited:
- EP-A1- 0 763 323
- EP-A1- 1 114 578
- WO-A1-02/28167
- WO-A1-2010/128103

## Description

### Field of the invention

The present invention concerns a hand-held binding apparatus for use in agriculture, notably for binding grape vines to supporting cables. The present invention comprises a hand-held binding apparatus which comprises a tension adjusting means which is selectively operable to push, or restrain, wire to adjust the tension in the wire as the wire is pulled around a branch and support by a pulling member.

### Description of related art

Binding apparatuses are which are available today, such as the binding apparatus of EP1114578, comprise a pulling member which pulls wire around objects such as a vine shoots around which the wire is to bind. However, in the existing binding apparatuses, there is no adjustment in the tension in the wire as the pulling member is moving around the objects which the wire is to bind.

Accordingly the tension in the wire as the wire is being moved around an object will be much larger if the wire has difficulties in progressing around a large diameter wine shoot or around a rough, uneven object than the tension in the wire pulled around a smaller diameter or smoother object. This is particularly a problem when it comes to binding delicate objects such as vine shoots, whereby if the vine shoot has a large diameter the high tension in the wire may cause the wire to damage the vine shoot, or the wire to break.

Other agricultural binding apparatuses, such as the binding apparatus of EP0763323, push wire around wine shoots around which the wire is to bind. In these agricultural binding apparatuses there is no adjustment of the tension in the wire as the pulling member is moving around the shoots which the wire is to bind; moreover there will be no tension in the wire as it is pushed around the objects. The tension in the wire is only created in a final step, after the wire has been moved around the objects, when the ends of the wire are twisted in a terminal of the binding apparatus. However since there is no tension in the wire as it is pushed around the wine shoot, the wire may become slack or crumpled, making it is difficult to move the wire to the terminal where its ends will be twisted; often the end of the wire will fail to reach the terminal where its ends will be twisted.

WO0228167 describes another binging apparatus in which the wire is pushed around the object by means of a first motor and a driving roller. The binding apparatus comprises a nose comprises a first fixed portion forming an open hook ending with an area having the shape of a circular arc in which a second portion is slidably and guidably mounted. The first motor is arranged also for closing and opening the guiding nose. The binding apparatus comprises also a second motor for simultaneously driving a device for cutting the wire and a twister for twisting the wire.

It is an aim of the present invention to mitigate or obviate the above-mentioned disadvantages.

### Summary of the invention

According to the present invention there is provided a hand-held binding apparatus for binding a branch such as a vine shoot to a support using wire, the binding apparatus comprising, a pulling member which can hold a wire, and which is operable to move around the branch and support, so that the pulling member pulls the wire around the branch and support; and a tension adjusting means which is selectively operable to push, or restrain, the wire which the pulling member pulls, to adjust the tension in the wire.

The tension adjusting means may be operable to push and/or restrain the wire which the pulling member pulls, to adjust the tension in the wire. If the tension in the wire is to be increased, the tension adjusting means will be operated to restrain the wire; if the tension in the wire is to be decreased the tension adjusting means will be operated to push the wire.

Preferably the tension adjusting means is selectively operable to push, or restrain, the wire which the pulling member pulls, to adjust the tension in the wire, so that the tension of the wire can be maintained within a predefined range.

The binding apparatus may comprise a first motor for actuating the pulling member to move around the branch and support.

Preferably the first motor is configured to actuate the pulling member to move around the branch and support at a constant speed.

The apparatus may further comprise gears which transmit torque generated by the first motor to the pulling member. Preferably the pulling member comprises teeth with engage teeth on the gears.

The apparatus may further comprise a second motor for selectively actuating the tension adjusting means to push or restrain the wire.

The apparatus may further comprise gears which transmit torque generated by the first motor to the tension adjusting means.

The tension adjusting means may comprise at least a first roller which mechanically cooperates with the wire by friction. The second motor may operate to adjust the speed of rotation of the first roller so that the tension in the wire is adjusted. For example, if the first roller is rotated at a speed which is faster than the speed at which the pulling member pulls the wire, then first roller will push the wire in the direction which the pulling member is pulling the wire so that the tension in the wire is decreased. Conversely if the first roller is rotated at a speed which is lower than the speed at which the pulling member is pulling the wire, then the first roller will restrain the wire which the pulling member is pulling so that the tension in the wire is increased. It should be noted that the speed at which the pulling member pulls the wire depends on the speed at which the pulling member moves around the branch and support.

The tension adjusting means may further comprise a second roller, wherein the wire is arranged to extend between the first and second rollers and to mechanically cooperate with both the first and second rollers by friction. The second motor may operate to adjust the speed of rotation of the first and second rollers so that the tension in the wire is adjusted. Alternatively, the second motor may operate to rotate one of the rollers, wherein the other roller is driven by the first roller by friction.

For example, if the first and second rollers are rotated at a speed which is faster than the speed at which the pulling member pulls the wire, then the first and second rollers will push the wire in the direction which the pulling member pulls the wire so that the tension in the wire is decreased. Conversely if the first and second rollers are rotated at a speed which is lower than the speed at which the pulling member pulls the wire, then the first and second rollers will restrain the wire which the pulling member is pulling so that the tension in the wire is increased. It should be noted that the speed at which the pulling member pulls the wire is the speed at which the pulling member moves around the branch and support.

The first roller may comprise a smooth surface with which the wire mechanically cooperates.

The second roller may comprise a corrugated surface with which the wire mechanically cooperates.

The apparatus further may further comprise software which is configured to control the tension adjusting means, so that the tension in the wire is maintained within a predefined range.

Preferably the software is configured to control the second motor so that the tension in the wire is within a predefined range.

Preferably the software is configured to control the speed at which the second motor rotates the first and second rollers to regulate the tension in the wire, so that the tension in the wire is maintained within the predefined range.

The software may be further configured to control the speed at which the pulling member moves around the branch and support, so that the tension of the wire can also be controlled by the speed of rotation of the pulling member.

The software may be configured to control the speed at which the pulling member moves around the branch and support by controlling the first motor.

Preferably the software may further control the speed at which the pulling member moves around the branch and support so that the tension in the wire is within a predefined range. Preferably the software will control the first and second motors so that the tension in the wire is within a predefined range. Thus, both the speed at which the first motor moves the pulling member around the branch and support and the speed at which the second motor rotates the first and second rollers may be controlled by software so that the tension in the wire is within the predefined range.

The software may be further configured to control the tension adjusting means so that the length of wire which is pulled around the branch and support by the pulling member is within a predetermined range.

The software may be further configured to control the tension adjusting means so that the length of wire which passes beyond the branch and is available for twisting is within a predetermined range.

For example when the second motor is operated to rotate the first roller, or the first and second rollers, at a speed which is faster than the speed at which the pulling member is pulling the wire, a longer length of wire will be moved by the pulling member around the branch and support. Conversely when the second motor is operated to rotate the first roller, or the first and second rollers, at a speed which is slower than the speed at which the pulling member is pulling the wire, a shorter length of wire will be moved by the pulling member around the branch and support.

The apparatus may further comprise selection means for enabling a user to select the length of the wire which is to be pulled around the branch and support by the pulling member. Those means could also allow the user to adjust the length of the wire's strands which are available for twisting. Those means could also allow the user to adjust the number of twists made by the two strands of the wire.

The apparatus may comprise a means for enabling a user to select a range for the length of the wire which is to be pulled around the branch and support by the pulling member.

The apparatus may further comprise a cutting system for cutting the wire.

The pulling member may comprise an actuating member which is secured to the pulling member at a position on the pulling member which ensures that the actuating member can engage the cutting system to actuate the cutting system after the pulling member has been moved around the branch and support.

In a preferred embodiment the actuating member is placed on the pulling member at an angle belonging to the range 5° - 30°, said angle being formed between the actuating member and an ideal horizontal line having the same direction of the main length of the apparatus.

Preferably the actuating member is secured to the pulling member at a position on the pulling member which ensures that the actuating member can engage the cutting system to actuate the cutting system shortly after the pulling member has moved around the branch and support, possibly when the pulling member is still rotating.

The cutting system may comprise a moveable cutting member and a wire holder which holds the wire, wherein the cutting member is moveable relative to the wire holder so that the wire can be cut.

The actuating member may be a cam. The actuating member which is secured to the pulling member may be a projection which is secured to the pulling member and projects from the pulling member. The projection may be arranged on the pulling member so that rotation of the pulling member around the object to bind will bring the projection into abutment with the moveable cutting member. Preferably the projection will abut the moveable cutting member immediately after the pulling member has been rotated around the branch and support, or at the end of this rotation.

The pulling member preferably pushes the moveable cutting member to move the moveable cutting member relative to the wire holder to effect cutting wire held within the wire-holder. More preferably the pulling member pushes the moveable cutting member to move the moveable cutting member relative to the wire holder to cut the wire held within the wire-holder at the end of rotation of the pulling member.

Once the wire is cut the section of wire, which has been pulled by the pulling member around the branch and support, becomes mechanically independent of the rest of the wire which is held by the wire holder.

The apparatus may comprise a rotatable element which is operable to twist opposite ends of a section of the wire around each other.

Preferably the apparatus further comprises a rotatable element which is operable to twist opposite ends of a section of the wire around each other a predefined number of times.

Preferably the two ends of the wire are twisted around each other immediately after they have been cut. Therefore, the rotation of the rotatable element does not interfere with the uncut wire and does not increase the tension in this wire before it is cut.

Preferably the wire is held by the tension adjusting means while and after it has been cut. Therefore, the end of the wire is still held by the tension adjusting means after it has been cut, so that it is not lost. Preferably the tension adjusting means comprises at least one roller commanded by software for moving the wire forward.

The apparatus may comprise a means to enable a user to select the number of times which the opposite ends of the section of the wire are twisted around each other.

The apparatus may comprise a means for enabling a user to select a predefined range of tension for the bound wire, for example through selection of the number of twists of the wire.

The apparatus may comprise a means for selecting the number of times which the opposite ends of the section of the wire are twisted around each other. In other words the apparatus may comprise a means for adjusting the number of times which the opposite ends of a section of the wire are twisted around each other by rotation of the rotatable element. Therefore the user can select the number of twists in the wire. In one embodiment, the apparatus comprises a selector for selecting between a first number of twists, for example two, and a second number of twists, for example three.

The rotatable element may comprise a plurality of blades radiating from a central hub. Opposite ends of a section of the wire can be received between the blades so that when the rotatable element is rotated the opposite ends of a section of the wire are twisted around each other.

Preferably the rotatable element is positioned such that as the pulling member moves around the branch and support, the pulling member will move the wire so that it extends between the blades of the rotatable element. Thus after the section of wire has been cut from the rest of the wire by the cutting system the opposite ends of the section of wire will already be positioned between the blades of the rotatable element ready for twisting.

The tension in the binding may be dictated by the length of the section of wire which has been moved by the pulling member around the branch and support and by the number of twists which are provided at the ends of the section of wire. For the same length of section of wire the tension of the binding will increase with an increasing number of twists which are provided at the ends of the section of wire and will decrease with a decreasing number of twists which are provided at the ends of the section of wire. Likewise for the same number of twists provided at the ends of the section of wire, the tension in the binding will increase with a decreasing length of the section of wire, and will decrease with an increasing length of the section of wire.

Accordingly the user may achieve a binding which has any particular tensions by adjusting the apparatus to move the appropriate length of wire around the branch and support and by adjusting the apparatus to provide the appropriate number of twists in the ends of the section of wire.

The second motor may be configured to actuate the tension adjusting means when the second motor is rotated in a first direction and to actuate the rotatable element when the second motor is rotated in a second, opposite, direction.

The apparatus may comprise gears which transmit torque generated by the second motor when the second motor is rotated in a first direction, to the tension adjusting means, and gears which transmit torque generated by the second motor, when the second motor is rotated in a second, opposite, direction, to the rotatable element.

The tension in the wire when it is pulled by the pulling member may be determined by the torque which the first motor has to apply in order to rotate the pulling member and pull the wire. The tension in the wire when it is pulled by the pulling member may also be determined by the torque which the second motor has to apply in order to push or rotate the wire. The torque exerted by the first and/or second motors corresponds to the electric current supplied to the first respectively to the second motor. Accordingly, the apparatus may further comprise a means for determining the electric current which is input to at least one of the first or second motors so as to determine the tension in the wire, and to adjust the tension adjusting means so that the tension is within a predefined range.

For example the apparatus may use the current which is input to the first motor, to power the first motor, to determine the tension in the wire and may adjust the tension adjusting means so that the eventual tension is within a predefined range. For example, if the branch and support around which the wire is to bind have large diameters, then the current which is input to the first motor to move the pulling member around the branch and support will be large. Accordingly it can be determined that the tension adjusting means should be operated to push the wire to reduce the tension in the wire so that the tension in the wire is maintained within the predefined range. Likewise if the branch and support around which the wire is to bind have small diameters, then the current which is input to the first motor to move the pulling member around the branch and support will be small. Accordingly it can be determined that the tension adjusting means should be operated to restrain the wire to increase the tension in the wire so that the tension in the wire is maintained within the predefined range.

In one embodiment, the first and the second motor are software controlled using a suitable microcontroller for controlling motor drivers. The microcontroller may be programmed so as to control the position and speed of the first motor at any given time, so as to pull the wire at a prescribed speed and at the prescribed time. The microcontroller may determine the current that needs to be supplied to the first and/or second motor to reach this prescribed speed, and determine from this or these values a suitable rotation speed for the second motor in order to get a tension and/or length of wire within a predefined range.

The apparatus may comprise a sensorless position detection system for detecting the angular position of the pulling member. A sensorless position detection system is a system for detecting the angular position of the rotor of a motor based on signals supplied to the motor. An example of sensorless position detection system is disclosed in EP2471171.

The position detection system may comprise at least one magnet which is fixed to the pulling member and at least one Hall or magnetoresistive sensor which is fixed relative to a housing of the apparatus, for detecting when the pulling member is at a predefined angular position.

The sensorless position detection system may further comprise a second magnet which is fixed to the pulling member and a second Hall or magnetoresistive sensor which is fixed relative to a housing of the apparatus, so that the direction in which the pulling member is moved around branch and support can be determined.

A signal at the output of the first and/or second Hall or magnetoresistive sensor(s) may be used for recalibrating the sensorless position detection system each time the first or second magnet passes in front of the corresponding Hall or magnetoresistive sensor.

The pulling member may have a C-shaped profile. It may be rotated by the first motor to pull the wire around the objects to bind.

The pulling member may comprise an engaging means through which the wire is introduced.

The engaging means may comprise a fixed member secured to the pulling member and including a gorge through which the wire is introduced. The width of the gorge is larger than the diameter of the wire. The gorge can be covered at its upper side, by forming a short channel. The channel is short as its length is lower than the length of the pulling member. The function of the gorge is to introduce the wire in the bending part of the apparatus. A bending member, such as a pin, fixed relative to the housing of the apparatus may be provided to bend the wire downstream of the fixed member when the pulling member is rotated so that the fixed member is moved relative to the pin.

The apparatus may further comprise a system for automatically actuating the apparatus to bind a branch to a support using wire, when the branch and support are engaged by the apparatus.

For example, the apparatus may comprise a means for detecting if the branch and support have been received within the C-shaped pulling member; upon detection the system will automatically actuate the apparatus to bind the branch to a support using wire, without the user having to press any buttons. For example, upon detection that the branch and support have been received within the C-shaped pulling member, the system will automatically actuate the C-shaped pulling member to move around the branch and support so that it pulls the wire around the branch and support, and the other components of the apparatus such as the tension adjusting means etc. so that the apparatus binds the branch to the support, without the user having to press any buttons.

The system for automatically actuating the apparatus may comprise a sensor, such as an optical, capacitive or touch sensor, to detect if the branch and support have been received within the C-shaped pulling member. It will be understood that the system may comprise any other suitable sensing means.

### Brief Description of the Drawings

An embodiment of the present invention will be now be described, by way of example only, with reference to the following Figures in which:
Fig. 1 provides a perspective view of a hand-held binding apparatus according to an embodiment of the present invention;
Fig. 2 provides a cross-sectional view of the hand-held binding apparatus shown in Fig.1;
Fig. 3 provides a perspective view of the hand-held binding apparatus shown in Figs.1 and 2, and in particular of the tension adjusting means used in the hand-held binding apparatus;
Figs. 4a and 4b provide a perspective view of the front part of the hand-held binding apparatus shown in Figs.1 and 2, i.e. the part where the binding is performed, in particular of the cutting system used in the hand-held binding apparatus;
Fig. 5 provides a perspective view of the front part of the hand-held binding apparatus shown in Figs.1 and 2, in particular of the rotatable element used in the hand-held binding apparatus.

### Detailed Description of possible embodiments of the Invention

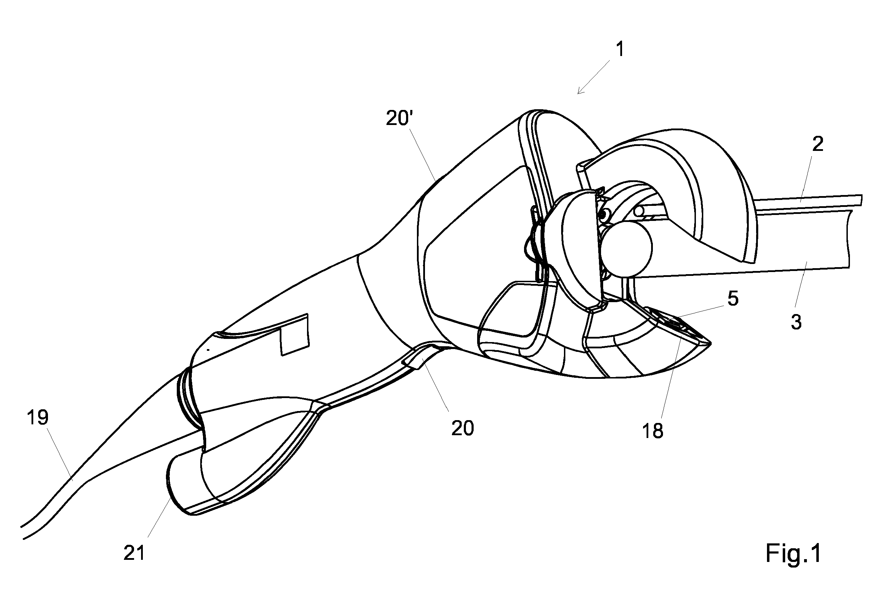

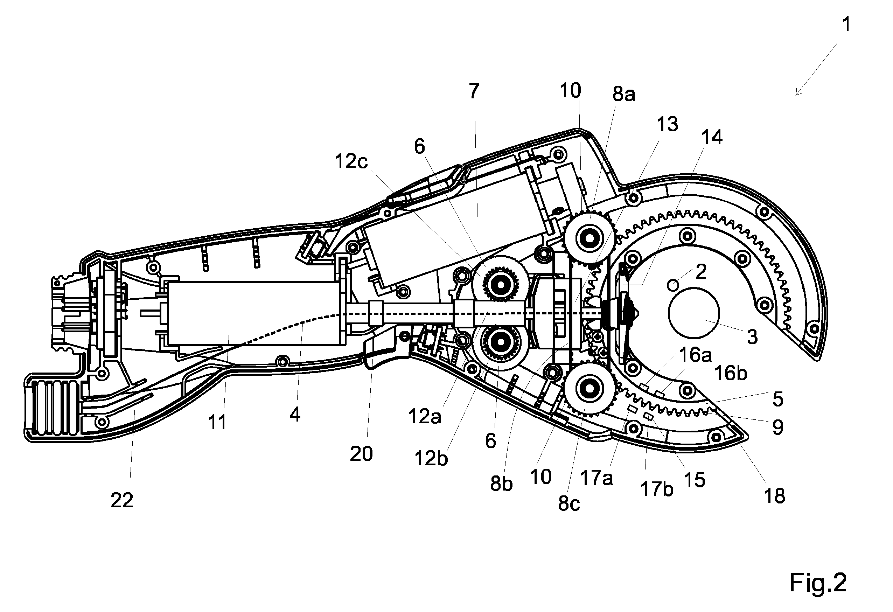

Referring to Figures 1 and 2; Figure 1 provides a perspective view of a hand-held binding apparatus 1 according to an embodiment of the present invention for binding a branch, such as a grape vine shoot, 3 to a support 2, such as a cable, using wire 4; Figure 2 provides a cross-sectional view of the hand-held binding apparatus 1 shown in Fig.1.

The apparatus 1 comprises a pulling member 5 which can hold the wire 4, and which is operable to move around the branch 3 and support 2, so that the pulling member 5 pulls the wire 4 around the branch 3 and support 2. The pulling member 5 has a C-shaped profile.

The apparatus 1 comprises a first motor 7, for actuating the pulling member 5 to move the wire 4 around the branch 3 and support 2 at a constant rotational speed. The apparatus comprises a first pulley 8a and a belt 8b which transmit the torque force generated by the first motor 7 to a second pulley 8c mounted on the same axis than a gear 10; the pulling member comprises a plurality of teeth 9 which engage teeth on the gears 10.

The apparatus 1 further comprises a tension adjusting means 6 which is selectively operable to push, or restrain, the wire 4 which the pulling member 5 pulls, to adjust the tension in the wire 4, so that the tension in the wire 4 can be maintained within a predefined range for tension, and so as to control the length of wire pulled by the pulling member.

The apparatus 1 comprises a second motor 11 for actuating the tension adjusting means 6 to selectively push or restrain the wire 4. Gears 12a,b,c are provided which transmit the torque force generated by the second motor 11 to the tension adjusting means 6.

The apparatus 1 further comprises an electronic circuit (not shown) having a battery for powering the motors 7, 11 with a microcontroller (not shown) for controlling the tension and currents provided to these motors at any given instant. In one embodiment, the battery and the electronic circuit with microcontroller are provided outside of the housing of the apparatus, for example as a separate unit that me be held for example in a backpack (not shown) and connected to the apparatus through the power and data cable 19.

The microcontroller comprises a software module in which software, for controlling the operation of the various components of the apparatus 1, is stored. The predefined range for tension in the wire 4 is defined by the software at the manufacturing stage. The software stored on the software module controls the tension adjusting means 6 and/or the speed at which the pulling member 5 moves around the branch 3 and support 2 so that the tension in the wire 4 is maintained within the predefined range for tension, and/or so that the length of wire 4 pulled around the branch 3 is within a predetermined range. The software does this by controlling the second and/or first motors respectively; more specifically the software does this by controlling the speed at which the second and/or first motors 11,7 rotate.

The apparatus 1 shown in Figures 1 and 2 further comprises a cutting system 13 to cut the wire 4 so that the section of wire which has been moved around the branch 3 and support 2 can be cut from the rest of wire. The apparatus 1 further comprises a rotatable element 14 which is operable to twist opposite ends of the section of the wire around each other. The cutting system 13 and rotatable element 14 will be described in more detail later.

The apparatus 1 further comprises a sensorless position detection system 15, 16a, 16b for determining the angular position of the pulling member 5 at any given time.

The sensorless position detection system determines the position of the rotor of the first motor 7; this information is used by the microcontroller for determining when to stop rotation of the motor 7 and when to change the sense of rotation of the second motor. The sensorless position detection system may use the currents and tensions provided to the motor 7, and be based for example on technology disclosed in EP2471171. A sensorless position detection system could be used to determine the position of the rotor of the second motor 11 too.

In order to calibrate regularly the sensorless position detection system, the apparatus further comprises a first or a first and second magnets 16a,b which are fixed to the pulling member 5 and a first and second Hall or magnetoresistive sensors 17a,b which are fixed relative to a housing 18 of the apparatus 1. The sense of the rotation of the pulling member 5 around the branch 3 and support 2 can be determined from the order in which the first and second sensors 17a,b detect the first and second magnets 16a,b (the first and second sensors 17a,b detect the magnets 16a,b when the magnets 16a,b are moved passed the respective sensors 17a,b) ; for example if the first sensor 17a detects the magnets 16a,b first followed by the second sensor 17b then it can be determined that the pulling member 5 rotates in an anti-clockwise direction; likewise if the second sensor 17b detects the magnets 16a,b first followed by the first sensor 17a then it can be determined that the pulling member 5 rotates in a clockwise direction. The position of the pulling member 5 determined with the sensors 17a,b is transmitted to the microcontroller and used for calibrating the sensorless determination of the position at each turn.

Signals which are output from the first and/or second Hall sensor(s) 17a,b are used for recalibrating the sensorless position detection system 15.

The apparatus 1 further comprises a loading tube 21, visible in Fig. 1, which is connected to a guide tube 22, visible in Fig. 2, which extends inside the housing 18 of the apparatus to the tension adjusting means 6. The wire 4 may be loaded manually by the user into the apparatus 1 via the loading tube 21 and may be guided to the tension adjusting means by the guiding tube 22. Typically a large coil of wire will be carried by a user in a backpack; the large coil of wire forms a wire reserve which will provide the wire required for a plurality of bindings. In one embodiment the coil of wire comprises a passive RFID tag. In another embodiment the coil is contained in a container inside the backpack, this container comprising an electronic module communicating, in a unidirectional or bidirectional way, with the electronic module of the binding apparatus, which is contained in the backpack too.

The apparatus 1 is connected to a power source and to the electronic control circuit with microcontroller by means of a power and data cable 19. The power source may comprise one or a plurality of batteries, for example a set of batteries connected as described in EP2451044, the contents of which is hereby enclosed by reference. The batteries, an electronic battery management system, and the electronic control circuit with microcontroller for controlling the motors 7, 11 may be hold in a backpack, preferably in the same backpack that also holds the wire coil.

Alternatively, part of the electronic circuit with microcontroller, or even the whole circuit for driving and controlling the motors, may be provided in the hand-held housing.

The power from the power source can be used to supply all the components of the apparatus 1 and in particular the first and second motors 7,11. The apparatus 1 further comprises a first operating button 20 which the user presses to actuate the apparatus 1 to begin binding the wire 4 around the branch 3 and support 2. In one embodiment the apparatus 1 may comprise a second operating bottom 20', visible in Fig. 1, and which can be actuated by the thumb of the user. In another embodiment the apparatus comprises only the second operating bottom 20'.

In an alternative embodiment the hand-held binding apparatus may further comprise a system for automatically actuating the apparatus to begin binding when the branch 3 and support 2 are engaged by the apparatus. For example, the system may comprise an optical, capacitive or touch sensor for detecting when the branch 3 and support 2 have been received within the C-shaped pulling member 5; upon detection the system will automatically actuate the hand-held binding apparatus to perform binding without the user having to press any buttons.

Before use the user first loads the wire 4 into the apparatus 1. Typically an end of wire coil which is held in the back pack carried by the user is loaded into the apparatus via the loading tube 21. The user pushes the wire 4 through the loading tube 21 and into a guide tube 22; as the user continues to push the wire 4 into the loading hole, the guide tube 22 will direct the wire so that it is received into the tension adjusting means 6. At this moment the user presses the operating button 20: the pulling member 5 is then moved by the first motor 7 so as to place its open part in front of the cutting system; in the same time the rollers of the tension adjusting means 6 driven by the second motor 11 start to rotate at a low speed (i.e. at a speed less that 300 rpm) so as to advance (by pushing and/or by pulling) the wire 4. The user does not need any more to push the wire. The wire is then received into the cutting system 13. The tension adjusting means 6 continue to push and/or pull the wire so that the wire extends through the cutting system 13. Alternatively, the wire may be pushed by the user until the wire extends through the cutting system 13.

The wire pushed by the user or by the rollers 6 goes through a hole or gap through the cutting system 13 and goes beyond the rotatable element 14 so that the end of the wire protrudes from the apparatus 1 near the pulling member 5. The user then manually takes the wire and pulls it for a while. In the same time he stops to press the operating button 20. Then the pulling member 5 comes back to its initial position (represented e.g. in Fig. 2) and by its rotation cuts the part of the wire exceeding from the rotatable element 14. The apparatus 1 is then ready for use.

During use the user positions the apparatus 1 so that the branch 3 and the support 2 are received within the C-shaped pulling member 5. The user then presses the operating button 20: the wire is then pulled and/or pushed by the rollers of the tension adjusting means 6 so that it is engaged in the engaging means 57 and it is bent by the fixed pin 56 on the engaging means 57. The pulling member 5, along with the engaging means 57, is then moved by the first motor 7 around the branch 3 and the support 2; since the wire 4 is held by the pulling member 5 by its contact with the engaging means 57, as the pulling member 5 is moved around the branch 3 and the support 2, it will pull the wire 4 around the branch 3 and the support 2.

As the pulling member 5 is moved around the branch 3 and support 2, the software stored in the software module controls the second motor 11 to operate the tension adjusting means 6 so that the tension in the wire 4 is maintained within a predefined range for wire tension. The software stored in the software module may also control the first motor 7 to regulate the speed at which the pulling member 5 moves around the branch 3 and support 2. More generally, the software run by the microcontroller controls the speed of rotation of the first motor 7 and the speed of rotation of the second motor 11 so that a predefined wire tension is reached; the tension is determined for example based on the torque that the first motor 7 needs to exert for rotating the pulling member 5 at the predefined speed, and/or based on the torque or speed of rotation of the second motor 11.

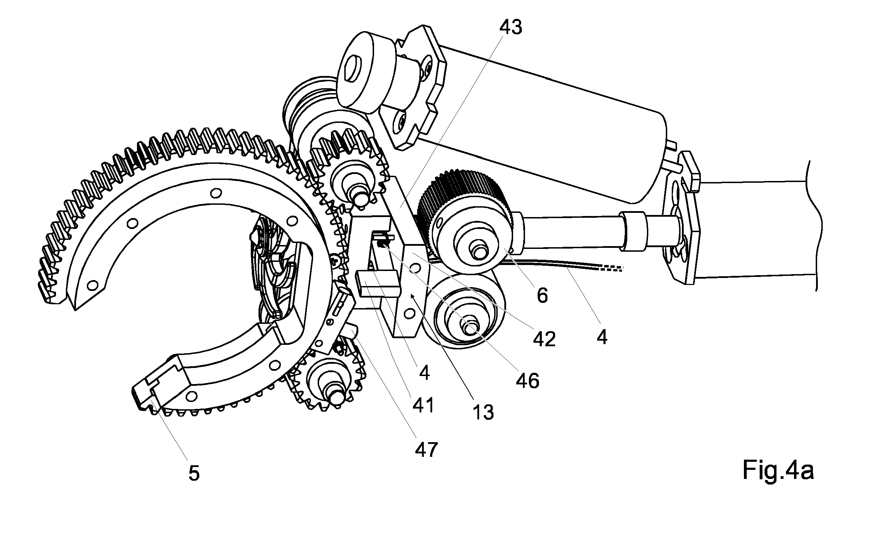

Immediately after the pulling member 5 has been moved around the branch 3 and support 2, the cutting system 13 is actuated to cut the wire 4 so that the section of wire which has been moved around the branch 3 and support 2 is cut from the rest of the wire. The cutting system is actuated by the pin 47 on to pulling member 5 that displaces the moving part 41 of the cutting system so as to cut the wire while the pulling member terminates its rotation. A spring 46, visible in Fig. 4a, or any other suitable mechanical or electronic returning means known by the man skilled in the art, then returns the moving part 41 to its initial position in order to be ready to cut the next wire. In one embodiment the cutting system comprises a stop for limiting the displacement of the moving part 41.

Once the wire has been cut, the end of the cycle is determined by the microcontroller based on data from the sensorless position determination system. The microcontroller then stops the rotation of the first motor 7, and inverts the sense of rotation of the second motor 11 so as to stop the driving of the rollers in the tension adjusting means 6, and to actuate the rotatable element 14 so that the ends of the section of wire are twisted around each other a predetermined number of times, to complete the binding.

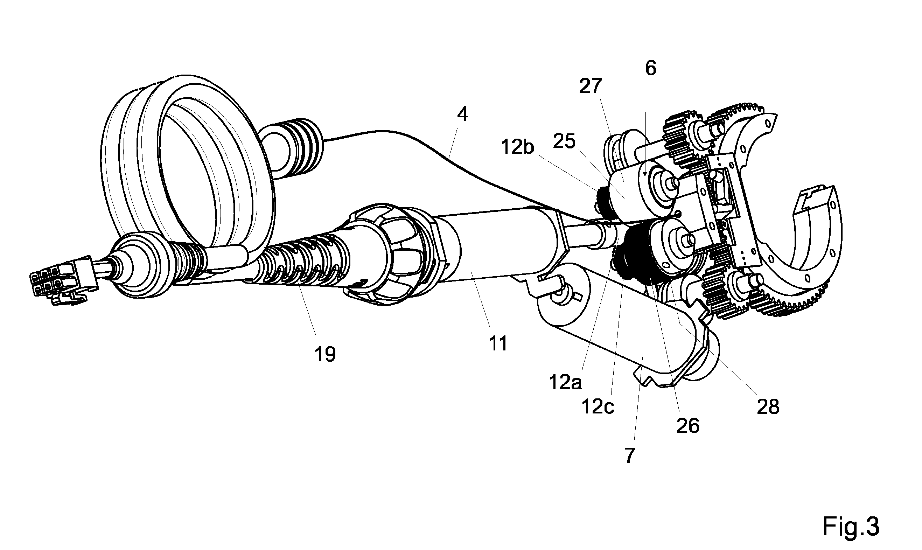

Figure 3 provides a perspective view of the tension adjusting means 6 used in the hand-held binding apparatus 1 shown in Figures 1 and 2.

In this example the tension adjusting means 6 comprises at a first roller 25 and second roller 26 each of which is arranged to mechanically cooperate with the wire 4 by friction. The first and second rollers 25,26 are arranged adjacent one another and the wire 4 is arranged to extend between the first and second rollers 25,26. In this example, the first roller comprises a smooth surface 27 with which the wire 4 mechanically cooperates by friction and the second roller 26 comprises a corrugated surface 28 with which the wire 4 mechanically cooperates by friction.

The second motor 11 actuating the tension adjusting means 6 to selectively push or restrain the wire 4 is also shown in Figure 3. First, second and third gears 12a,b,c are provided which transmit the torque force generated by the second motor 11 to the first and second rollers 25,26. The second gear 12b is fixed to the first roller 25 and the third gear 12c is fixed to the second roller 26. The second and third gears 12b,c each comprise teeth which engage teeth on the first gear 12a fixed to a shaft 29 which is rotated by the second motor 11.

The second motor 11 will operate to adjust the speed of rotation of the first and second rollers 25,26 so that the tension in the wire 4 is adjusted. For example, if the first and second rollers 25,26 are rotated at a high speed (i.e. at a speed which is faster than the speed at which the pulling member 5 is pulling the wire 4) then the first and second rollers 25,26 will push the wire 4 in the direction which the pulling member 5 is pulling the wire 4 so that the tension in the wire 4 is decreased. Conversely if the first and second rollers 25,26 are rotated at a low speed (i.e. at a speed which is lower than the speed at which the pulling member 5 is pulling the wire 4) then the first and second rollers 25,26 will restrain the wire 4 which the pulling member 5 is pulling so that the tension in the wire 4 is increased. It should be noted that the speed at which the pulling member 5 pulls the wire is the speed at which the pulling member 5 is moved around the branch 3 and support 2 by the first motor 7.

It will be understood that it is not essential that the tension adjusting means comprises two rollers 25,26; in another embodiment the tension adjusting means 6 may comprise one single roller only which mechanically cooperates with the wire 4 by friction. The single roller may take the same configuration of either the first or second rollers 25,26 shown in Figure 3. In this case the second motor 11 will operate to adjust the speed of rotation of the single roller so that the tension in the wire 4 is adjusted. It will also be understood that the smooth and corrugated surfaces 27,28 provided on the first and second rollers 25,26 is not essential and the surface of the rollers 25,26 may have any other suitable configuration.

The electronic circuit that drives the electric motors 7, 11 is able to determine the current supplied to at least one of the first or second motors 7,11 so as to detect tension in the wire 4. In a DC motor, this current is related to the torque exerted by the motor, and thus to the tension in the wire 4. The measured electrical current is passed to the software module; the software in the software module is configured to determine the tension in the wire 4 from the measured electrical current.

If the branch 3 and support 2 around which the wire 4 is to bind have large diameters, then the current which is required by the first motor 7 to move the pulling member 5 around the branch 3 and support 2 will be large since there will be a large friction between the wire 4 and branch 3 and support 2; conversely if the branch 3 and support 2 around which the wire 4 is to bind have smaller diameters, and/or a smoother surface, then the current which is required by the first motor 7 to move the pulling member 5 around the branch 3 and support 2 will be smaller since there will be a smaller friction between the wire 4 and branch 3 and support 2.

The tension in the wire 4 which is determined by the software is then compared to the predefined range for wire tension which is stored in the software to detect if the tension in the wire is within the predefined range for wire tension.

As already mentioned the software stored on the software module controls the tension adjusting means 6 and/or the speed at which the pulling member 5 moves around the branch 3 and support 2 so that the tension in the wire is maintained within the predefined range for wire tension.

If the determined tension is not within the predefined range for wire tension, then preferably the software will adjust the tension adjusting means 6 accordingly so that the tension in the wire 4 is brought to within the predefined range for wire tension. Specifically, the software will adjust the speed at which the second motor 11 rotates the first and second rollers 25,26 so that the tension in the wire 4 is adjusted to be within the predefined range for wire tension. For example, to decrease the tension in the wire 4 the software may adjust the second motor 11 so that the speed at which the first and second rollers 25,26 push the wire is equal or nearly equal to the speed at which the pulling member 5 pulls the wire. Conversely, to increase the tension in the wire 4 the software will adjust the second motor 11 so that it causes the first and second rollers 25,26 to push the wire at a speed which is slower than the speed at which the pulling member 5 pulls the wire 4; to achieve this the software will adjust the second motor 11 so that it rotates at a slower speed.

If the determined tension is not within the predefined range for wire tension, then alternatively, or additionally, the software may adjust the speed at which the first motor 7 moves the pulling member 5 around the branch 3 and support 2 so that the tension in the wire 4 is brought to within the predefined range for wire tension. For example, to decrease the tension in the wire 4 the software may adjust the first motor 7 so that it moves the pulling member 5 around the branch 3 and support 2 at a speed which is slower than the speed of rotation of the first and second rollers 25,26; to achieve this the software will adjust the first motor 7 so that it pulls the wire 4 at a speed close to the speed at which the first and second rollers 25, 26 push the wire. Conversely to increase the tension in the wire 4 the software may adjust the first motor 7 so that it pulls the wire 4 around the branch 3 and support 2 at a speed which is faster than the speed at which first and second motors 25,26 push the wire.

The software which is stored in the software module may also be configured to control the tension adjusting means 6 so that the length of wire 4 which is moved around the branch 3 and support 2 by the pulling member 5 is within a predetermined range for wire length. To achieve this the software will control the second motor 11 so that the speed of the first and second rollers 25,26 are rotated at the appropriate speed to ensure that the length of wire 4 which is moved around the branch 3 and support 2 is within the predetermined range for wire length.

To decrease the length of the wire 4 which is moved around the branch 3 and support 2 the software will adjust the second motor 11 so that it causes the first and second rollers 25,26 to push the wire 4 at a speed which is slower than the speed at which the pulling member 5 pulls the wire 4, so that the wire tension will be increased and the wire length decreased. Conversely to increase the length of the wire 4 which is moved around the branch 3 and support 2 the software will adjust the second motor 11 so that it causes the first and second rollers 25,26 to push the wire 4 at a speed which is faster than the speed at which the pulling member 5 pulls the wire 4, so as to reduce the wire tension and increase its length.

The set range for wire length may be stored in the software at the manufacturing stage.

Thus the software can control the tension adjusting means 6 so that the tension within the wire 4 is within a predefined range for wire tension and/or so that the length of wire 4 which is moved around the branch 3 and support 2 by the pulling member 5 is within a predefined range for wire length.

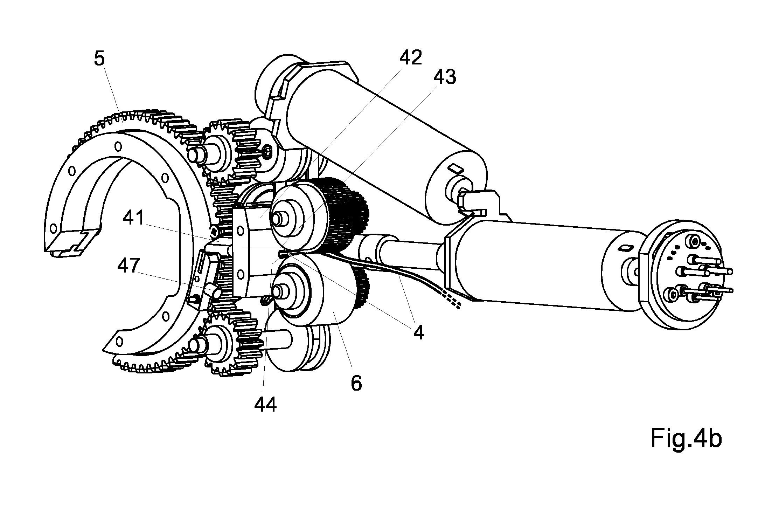

Figures 4a and 4b each provide perspective views of the cutting system 13, used in the hand-held binding apparatus 1 shown in Figs. 1 and 2, to cut the wire 4. In particular the cutting system 13 is used to cut the section of the wire which has been moved around the branch 3 and support 2 from the rest of wire, so that the section of wire is mechanically independent from the rest of the wire.

The cutting system 13 comprises a moveable cutting member 41 and a wire holder 42 which holds the wire 4. The cutting member 41 is pivotable around an axis (not shown), and thus movable relative to the wire holder 42 so that the wire 4 can be cut. In this example the wire holder 42 comprises a block 43 with a channel 44 defined therein through which the wire 4 can pass. The channel preferably has a frusto-conical profile to facilitate engagement of the wire on the upstream side. The cutting member 41 can move across a mouth of the channel 44 so that the wire 4 is cut at the mouth of the channel 44.

An actuating member 47, in the form of a projecting member 47, is further provided on the pulling member 5. The actuating member 47 is preferably located proximate to an end of the pulling member 5.

In a preferred embodiment the actuating member is placed on the pulling member at an angle belonging to the range 5° - 30°, said angle being formed between the actuating member and an ideal horizontal line having the same direction of the main length of the apparatus.

During use, immediately after the pulling member 5 has moved the wire 4 around the branch 3 and support 2, the actuating member 47 is moved by further rotation of the pulling member 5, to abut the moveable cutting member 41. The movement of the pulling member 5 pushes the actuating member 47 against the moveable cutting member 41 to force the cutting member 41 to rotate and move across the mouth of the channel 44 in the wire holder 42 so that the wire 44 is cut at the mouth of the channel 44. A spring (not shown) is provided for returning the moveable cutting member to its initial position after the wire has been cut.

Once cutting is complete a section of wire, which extends around the branch 3 and support 2, is mechanically independent of the rest of the wire.

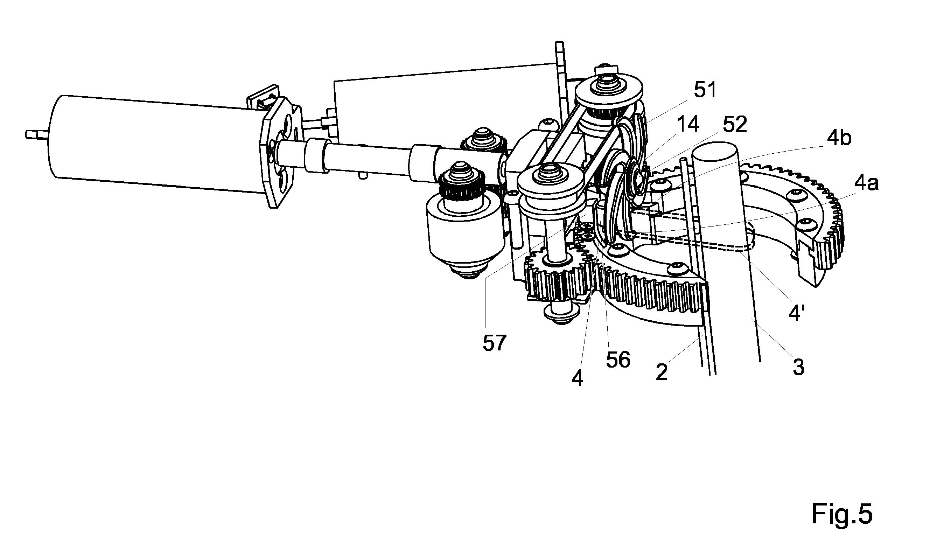

Figure 5 provides a perspective view of the rotatable element 14 used in the hand-held binding apparatus 1 shown in Figs. 1 and 2. The section of wire 4' which has been moved around the branch 3 and support 2 and which has been cut from the rest of the wire 4 by the cutting system is shown as a dashed line. The rotatable element 14 is operable to twist opposite ends 4a,4b of the section of the wire 4', around each other to complete the binding, and to release this section from the engaging means 57 on the pulling element 5. The rotatable element 14 comprises a plurality of blades 51 which radiate from a central hub 52.

The rotatable element 14 is positioned such that as the pulling member 5 moves the wire 4 around the branch 3 and support 2, the wire 4 will be moved so that it extends between the blades 51 of the rotatable element 14; thus immediately after the section of wire 4' which extends around the branch 3 and support 2 has been cut from the rest of the wire by the cutting system 13, the opposite ends 4a,b of the section of wire 4' will already be positioned between the blades 51 of the rotatable element 14 ready for twisting. Preferably, the rotatable element 14 is positioned such that the pulling member 5 will move the wire 4 between two different pairs of blades 51 of the rotatable element 14. Advantageously, the user is not required to manually position the opposite ends 4a,b of the section of the wire 4' between the blades 51, and immediately after the wire 4 has been cut by the cutting system 13 the rotatable element 14 can actuated to twist the opposite ends 4a,b of the section of the wire 4' around each other to complete the binding.

As discussed above the second motor 11 actuates the tension adjusting means 6. In this embodiment the second motor 11 is also used to actuate rotatable element 14. The second motor is configured to actuate the tension adjusting means when the second motor is rotated in a first direction and to actuate the rotatable element when the second motor is rotated in a second, opposite, direction.

During use, the wire 4 is moved between the blades 51 of the rotatable element 14 by the pulling member 5 as the pulling member 5 moves the wire 4 around the branch 3 and support 2. Thus when the wire 4 is cut by the cutting system 13 to define the wire section 4' the opposite ends 4a,b of the wire section 4' are already located between the blades 51 of the rotatable element 14. Preferably the pulling member 5 moves the wire 4 between two different pairs of blades 51 so that the opposite ends 4a,b of the section of the wire 4' are located between the two different pairs of blades 51.

Immediately after the cutting system 13 has cut the wire 4, the rotatable element 14 is rotated. As the rotatable element 14 rotates the blades 51 will twist the opposite ends 4a,b of a section of the wire 4' around each other.

The rotatable element 14 is configured to rotate a predefined number of times so that the opposite ends 4a,b of the section of the wire 4' are twisted around each other a predefined number of times. The predefined number of times which the rotatable element 14 rotates may be set at the manufacturing stage.

In another embodiment the hand-held binding apparatus further comprises a means for selecting the number of times which the opposite ends 4a,b of the section of the wire 4' are twisted around each other. This enables a user to adjust the number of times which the opposite ends 4a,b of a section of the wire 4' are twisted around each other.

Once the opposite ends 4a,b of the section of the wire 4' have been twisted around each other the binding is complete, and the branch 3 will be bound to the support 2 by the section of wire 4'. The pulling member 5 then rotates further to be in position for receiving the end of the wire 4 and pulls the next stretch or wire.

The tension in the final binding is influenced by the length of wire which was moved by the pulling member around the branch 3 and support 2 (i.e. the length of the wire section 4') and the number of times which the opposite ends 4a,b of the section of the wire 4' are twisted around each other. For the same length of section of wire 4' the tension of the binding will increase with an increasing number of twists which are provided at the ends 4a,b of the section of wire 4' and will decrease with a decreasing number of twists which are provided at the ends 4a,b of the section of wire 4'. Likewise for the same number of twists provided at the ends 4a,b of the section of wire 4', the tension in the binding will increase with a decreasing length of the section of wire 4', and will decrease with an increasing length of the section of wire 4'. Accordingly, a user may achieve a binding which has any particular tension by adjusting the apparatus 1 to move the appropriate length of wire around the branch 3 and support 2 and to provide the appropriate number of twists in the ends 4a,b of the section of wire 4'.

Figure 5 also illustrates how the pulling member 5 holds the wire 4; an engaging means 57 is secured to the pulling member 5. It is a fixed member 57. A fixed pin 56 is provided for bending the portion of wire that passes through a channel in the fixed section 57 when the pulling member is rotated, so as to bend the wire.

The present invention concerns also a hand-held binding apparatus 1 for binding a branch 3 to a support 2 using wire 4, the binding apparatus comprising,
a housing;
a pulling member 5 which can hold a wire 4, and which is operable to move around the branch 3 and support 2, so that the pulling member 5 pulls the wire 4 around said branch 3 and support 2;
a cutting system 13 comprising a wire holder 43 which is fixed relative to the housing and which can hold the wire 4, and a cutting member 41 which is mounted pivotably with respect to the wire holder,
an actuating member 47 which can engage the cutting member 41 to cut the wire, wherein the actuating member is provided on the pulling member 5 and positioned on the pulling member such that the actuating member 47 engages the cutting member 41 to force the cutting member to rotate relative to the wire holder to cut the wire after the pulling member has moved around the branch and support.

Various modifications and variations to the described embodiments will be apparent to those skilled in the art. The scope of the invention is limited by the appended claims.

## Claims

1. A hand-held binding apparatus (1) for binding a branch (3) to a support (2) using wire (4), the binding apparatus (1) comprising,
a pulling member (5) which can hold a wire (4), and which is operable to move around the branch (3) and support (2), so that the pulling member (5) pulls the wire (4) around said branch (3) and support (2); and
a tension adjusting means (6);
**characterized in that** said tension adjusting means (6) is selectively operable to push, or restrain, said wire (4) which the pulling member (5) pulls, to adjust the tension in the wire (4).

2. The apparatus according to claim 1, wherein the binding apparatus comprises a first motor (7) for actuating the pulling member (5) to move around said branch and support.

3. The apparatus according to claim 1 and 2, wherein the binding apparatus comprises a second motor (11) for actuating the tension adjusting means (6) to selectively push or restrain the wire.

4. The apparatus according to any one of the preceding claims, wherein the tension adjusting means (6) comprises a first roller (25) a second roller (26), and wherein the wire (4) is arranged to extend between the first and second rollers and to mechanically cooperate with both the first and second rollers by friction.

5. The apparatus according to any one of the preceding claims, wherein the apparatus further comprises microcontroller with a software module on which software is stored wherein the software is configured to control the tension adjusting means (6), so that the tension in the wire is maintained within a predefined range.

6. The apparatus according to claim 5, wherein the software is further configured to control the speed at which the pulling member (5) moves around the branch and support, so that the speed of wire is within a set range.

7. The apparatus according to claim 5 or 6, wherein the software is further configured to control the tension adjusting means so that the length of wire which is pulled around the branch and support by the pulling member is within a predetermined range.

8. The apparatus according to any one of the preceding claims, wherein the apparatus further comprises a cutting system (13) for cutting the wire, and wherein the pulling member (5) further comprises an actuating member (47) which is secured to the pulling member at a position on the pulling member which ensures that the actuating member can engage the cutting system to actuate the cutting system to cut the wire (4) after the pulling member has been moved around the branch and support.

9. The apparatus according to any one of the preceding claims, wherein the apparatus further comprises a rotatable element (14) which is operable to twist opposite ends of a section of the wire around each other.

10. The apparatus according to claim 9, wherein the apparatus further comprises a means for selecting the number of times which the opposite ends of the section of the wire are twisted around each other.

11. The apparatus according to claim 9 or 10, when dependent on claim 3, wherein the second motor (11) is mounted so as to actuate the tension adjusting means (6) when the second motor is rotated in a first direction and to actuate the rotatable element (14) when the second motor is rotated in a second, opposite, direction.

12. The apparatus according to claim 3, further comprising motor driving means arranged for determining an electric current which is input to at least one of the first or second motors so as to determine the tension in the wire, and to adjust the tension adjusting means so that the tension is within a predefined range.

13. The apparatus according to any one of the preceding claims, wherein the apparatus further comprises a sensorless position detection system (15, 16a, 16b) for detecting the angular position of said pulling member.

14. The apparatus according to any one of the preceding claims, wherein the pulling member further comprises an engaging means (57).

15. The apparatus according to any one of the preceding claims, wherein the apparatus further comprises a system for automatically actuating the apparatus to bind a branch to a support using wire, when the branch and support are engaged by the apparatus.

## Patentansprüche

1. Eine tragbare Bindevorrichtung (1) zum Binden eines Ast (3) an eine Stütze (2) unter Verwendung eines Drahts (4), wobei die Bindevorrichtung (1) aufweist:
ein Ziehelement (5), das einen Draht (4) halten kann und das ausgebildet ist, sich um die Stütze (2) und den Ast (3) zu bewegen, so dass das Ziehelement (5) den Draht (4) um den Ast (3) und die Stütze (2) zieht;
ein Spannungsanpassungsmittel (6);
**dadurch gekennzeichnet, dass** das Spannungsanpassungsmittel (6) selektiv ausführbar ist, den Draht (4), den das Ziehelement (5) zieht, zu schieben oder zurückzuhalten, um die Spannung des Drahts (4) anzupassen.

2. Die Vorrichtung nach Anspruch 1, wobei die Bindevorrichtung (1) einen ersten Motor (7) zum Antreiben des Ziehelements (5) aufweist, um sich um den Ast und die Stütze zu bewegen.

3. Die Vorrichtung nach Anspruch 1 oder 2, wobei die Bindevorrichtung (1) einen zweiten Motor zum Antreiben des Spannungsanpassungsmittels (6) aufweist, um selektiv den Draht zu schieben oder zurückzuhalten.

4. Die Vorrichtung nach einem der vorigen Ansprüche, wobei das Spannungsanpassungsmittel (6) eine erste Rolle (25) und eine zweite Rolle (26) aufweist, und wobei der Draht (4) ausgebildet ist, sich zwischen der ersten und zweiten Rolle zu erstrecken und mechanisch mit der ersten und zweiten Rolle durch Reibung zu zusammenzuarbeiten.

5. Die Vorrichtung nach einem der vorigen Ansprüche, wobei die Vorrichtung weiter einen Mikrokontroller mit einem Softwaremodul, auf dem eine Software gespeichert ist, aufweist, wobei die Software ausgebildet ist, das Spannungsanpassungsmittel (6) so zu steuern, dass die Spannung des Drahts innerhalb einem vorbestimmten Intervall bleibt.

6. Die Vorrichtung nach Anspruch 5, wobei die Software weiter ausgebildet ist, die Geschwindigkeit, in der das Ziehelement (5) sich um den Ast und die Stütze bewegt, so gesteuert wird, dass die Geschwindigkeit des Drahts innerhalb einem bestimmten Intervall ist.

7. Die Vorrichtung nach Anspruch 5 oder 6, wobei die Software weiter ausgebildet ist, das Spannungsanpassungsmittel so zu steuern, dass die Länge des Drahts, der von dem Ziehelement um den Ast und die Stütze gezogen wird, sich innerhalb einem vorbestimmten Intervall befindet.

8. Die Vorrichtung nach einem der vorigen Ansprüche, wobei die Vorrichtung weiter ein Schneidesystem (13) zum Schneiden des Drahts aufweist, und wobei das Ziehelement (5) weiter ein Antriebselement (47) aufweist, das von dem Ziehelement in einer Position auf dem Ziehelement gesichert wird, das sicherstellt, dass das Antriebselement das Schneidesystem dazu bringt, das Schneidesystem zu aktivieren, um, nachdem das Ziehelement sich um den Ast und die Stütze bewegt hat, den Draht (4) abzuschneiden.

9. Die Vorrichtung nach einem der vorigen Ansprüche, wobei die Vorrichtung weiter ein drehbares Element (14) aufweist, das ausgebildet ist, die entgegen gesetzten Enden eines Abschnitts des Drahts umeinander zu verdrehen.

10. Die Vorrichtung nach Anspruch 9, wobei die Vorrichtung weiter Mittel aufweist, um die Anzahl der Male, die die entgegen gesetzten Enden umeinander verdreht werden, auszuwählen.

11. Die Vorrichtung nach Anspruch 9 oder 10, wenn abhängig von Anspruch 3, wobei der zweite Motor (11) so montiert ist, um die Spannungsanpassungsmittel (6) anzutreiben, wenn der zweite Motor in eine erste Richtung gedreht wird, und um das drehbare Element (14) anzutreiben, wenn der zweite Motor in eine zweite entgegen gesetzte Richtung gedreht wird.

12. Die Vorrichtung nach Anspruch 3, weiter aufweisend Motorantriebsmittel ausgebildet zum Bestimmen eines elektrischen Stroms, der mindestens einem des ersten oder zweiten Motors eingegeben wird, um so die Spannung in dem Draht zu bestimmen, und um die Spannungsanpassungsmittel anzupassen, so dass sich die Spannung innerhalb einem vorbestimmten Intervall befindet.

13. Die Vorrichtung nach einem der vorigen Ansprüche, wobei die Vorrichtung weiter ein sensorloses Positionsdektektionssystem (15, 16a, 16b) aufweist, um die Winkelposition des Ziehelements zu bestimmen.

14. Die Vorrichtung nach einem der vorigen Ansprüche , wobei das Ziehelement weiter ein Eingreifmittel (57) aufweist.

15. Die Vorrichtung nach einem der vorigen Ansprüche, wobei die Vorrichtung weiter ein System für das automatische Betreiben der Vorrichtung zum Binden des Asts an eine Stütze unter Verwendung eines Drahts, wenn der Ast und die Stütze von der Vorrichtung eingegriffen sind, aufweist.

## Revendications

1. Appareil de fixation portatif (1) pour fixer une branche (3) à un support (2) utilisant un fil (4), l'appareil de fixation comprenant
un élément de traction (5) qui peut tenir un fil (4), et qui est apte à se déplacer autour de la branche (3) et du support (2), de façon à ce que l'élément de traction (5) tire le fil (4) autour de ladite branche (3) et dudit support (2) ; et
un moyen d'ajuster la tension (6)
**caractérisé en ce que**
ledit moyen d'ajuster la tension (6) est apte à pousser, ou retenir, de façon sélective ledit fil (4) que l'élément de traction (5) tire, de façon à ajuster la tension dans le fil (4).

2. L'appareil selon la revendication 1, dans lequel l'appareil de fixation comprend un premier moteur (7) pour actionner l'élément de traction (5) de façon à se déplacer autour de la branche et du support.

3. L'appareil selon l'une des revendications 1 ou 2, dans lequel l'appareil de fixation comprend un deuxième moteur (11) pour actionner le moyen d'ajuster la tension (6) à pousser, ou retenir, de façon sélective le fil.

4. L'appareil selon l'une des revendications précédentes, dans lequel le moyen d'ajuster la tension (6) comprend un premier rouleau (25) et un deuxième rouleau (26), et dans lequel le fil (4) est arrangé pour s'étendre entre le premier et le deuxième rouleaux et pour coopérer de façon mécanique avec le premier et le deuxième rouleaux par frottement.

5. L'appareil selon l'une des revendications précédentes, dans lequel l'appareil comprend en outre un microcontrôleur avec un module pour programme d'ordinateur dans lequel un programme d'ordinateur est mémorisé et dans lequel le programme d'ordinateur est arrangé pour contrôler le moyen d'ajuster la tension (6), de façon à ce que la tension dans le fil est maintenue dans une plage prédéfinie.

6. L'appareil selon la revendication 5, dans lequel le programme d'ordinateur est en outre arrangé pour contrôler la vitesse à laquelle l'élément de traction (5) se déplace autour de la branche et du support, de façon à ce que la vitesse du fil est dans une plage donnée.

7. L'appareil selon l'une des revendications 5 ou 6, dans lequel le programme d'ordinateur est en outre arrangé pour contrôler le moyen d'ajuster la tension de façon à ce que la longueur du fil qui est tiré autour de la branche et du support par l'élément de traction est dans une plage prédéfinie.

8. L'appareil selon l'une des revendications précédentes, dans lequel l'appareil comprend en outre un système de coupe (13) pour couper le fil, et dans lequel l'élément de traction (5) comprend en outre un élément d'actionnement (47) qui est attaché à l'élément de traction en correspondance d'une position sur l'élément de traction qui assure que l'élément d'actionnement peut engager le système de coupe pour actionner le système de coupe pour couper le fil (4) après que l'élément de traction s'est déplacé autour de la branche et du support.

9. L'appareil selon l'une des revendications précédentes, dans lequel l'appareil comprend en outre un élément rotatif (14) qui est apte à torde les extrémités opposées d'une section du fil l'une autour de l'autre.

10. L'appareil selon la revendication 9, dans lequel l'appareil comprend en outre un moyen pour sélectionner le nombre de fois que les extrémités opposées de la section du fil sont tordues l'une autour de l'autre.

11. L'appareil selon l'une des revendications 9 ou 10, quand dépendant de la revendication 3, dans lequel le deuxième moteur (11) è monté de façon à actionner le moyen d'ajuster la tension (6) quand le deuxième moteur tourne dans une première direction, et à actionner l'élément rotatif (14) quand le deuxième moteur tourne dans une deuxième, opposée, direction.

12. L'appareil selon la revendication 3, comprenant en outre un moyen d'actionner un moteur, arrangé pour déterminer un courant électrique qui est donné à au moins un du premier ou deuxième moteurs, de façon à déterminer la tension dans le fil, et pour ajuster le moyen d'ajuster la tension de façon à ce que la tension est dans une plage prédéfinie.

13. L'appareil selon l'une des revendications précédentes, dans lequel l'appareil comprend en outre un système de détection de position sans capteurs (15, 16a, 16b) pour détecter la position angulaire dudit élément de traction.

14. L'appareil selon l'une des revendications précédentes, dans lequel l'élément de traction comprend en outre un moyen d'engagement (57).

15. L'appareil selon l'une des revendications précédentes, dans lequel l'appareil comprend en outre un système pour actionner de façon automatique l'appareil pour fixer une branche à un support utilisant un fil, quand la branche et le support sont engagés par l'appareil.
